(19) Europäisches Patentamt
European Patent Office
Office européen des brevets

(11) **EP 3 007 916 B1**

(12) **EUROPÄISCHE PATENTSCHRIFT**

(45) Veröffentlichungstag und Bekanntmachung des Hinweises auf die Patenterteilung:
**29.03.2017 Patentblatt 2017/13**

(21) Anmeldenummer: **14729023.3**

(22) Anmeldetag: **11.06.2014**

(51) Int Cl.:
**B60C 23/04** (2006.01)

(86) Internationale Anmeldenummer:
**PCT/EP2014/062151**

(87) Internationale Veröffentlichungsnummer:
**WO 2014/198785 (18.12.2014 Gazette 2014/51)**

(54) **VERFAHREN UND VORRICHTUNG ZUM LOKALISIEREN VON RÄDERN EINES FAHRZEUGS SOWIE REIFENDRUCKKONTROLLSYSTEM**

METHOD AND DEVICE FOR LOCATING WHEELS OF A VEHICLE, AND TYRE PRESSURE MONITORING SYSTEM

PROCÉDÉ ET DISPOSITIF DE LOCALISATION DES ROUES D'UN VÉHICULE AINSI QUE SYSTÈME DE CONTRÔLE DE LA PRESSION DES PNEUS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.06.2013 DE 102013211152**

(43) Veröffentlichungstag der Anmeldung:
**20.04.2016 Patentblatt 2016/16**

(73) Patentinhaber: **Continental Automotive GmbH 30165 Hannover (DE)**

(72) Erfinder:
• **BETTECKEN, Jürgen 93049 Regensburg (DE)**
• **SPOTKA, Jürgen 93128 Regenstauf (DE)**

(56) Entgegenhaltungen:
**WO-A1-2012/157308**

**Beschreibung**

Die vorliegende Erfindung betrifft ein Verfahren sowie eine Vorrichtung zum Lokalisieren von Rädern eines Fahrzeugs, bei dem bzw. der zumindest ein Rad eine Radelektronik aufweist. Darüber hinaus betrifft die vorliegende Erfindung ein Reifendruckkontrollsystem mit einer solchen Vorrichtung.

Aus dem Stand der Technik sind direkt messende Reifendruckkontrollsysteme bekannt, die sich dadurch auszeichnen, dass zumindest ein Rad mit einer direkt messenden Radelektronik ausgestattet ist. Wenn alle Räder mit Radelektroniken bestückt sind, die an einen fahrzeugseitigen Empfänger entsprechende Daten senden, ergibt sich der Wunsch dem Fahrer anzuzeigen zu können, von welchem Rad, dass heißt von welcher Radposition, Daten gesendet wurden. Auf diese Weise wird es möglich, dem Fahrer bei einem detektierten Druckverlust direkt mitzuteilen, welches der am Fahrzeug befindlichen Räder Druck verliert.

Aus dem Stand der Technik, zum Beispiel der WO 2010/034 703 A1, WO 2011/085 877 A1 und US 8 332 104 B2, sind Verfahren bekannt, die eine Lokalisierung einer Radelektronik bewerkstelligen durch einen Abgleich einer Winkelposition der Radelektronik im Vergleich zu einer Winkelposition der Räder, wie sie durch ein ABS- beziehungsweise ESP-System gemessen werden kann. Da einzelne Pakete, die von den Radelektroniken ausgesendet werden, möglicherweise nicht bei einem fahrzeugseitigen Empfänger ankommen (beispielsweise durch eine Abschirmung durch die Karosserie), ist es beispielsweise aus der US 8 332 104 B2 bekannt, mehrere zeitlich versetzte Pakete zu senden. Wenn beispielsweise das erste Paket verloren geht, kann mit Hilfe des zweiten Paketes und einer vorbekannten Verzögerungszeit auf den Absendezeitpunkt des ersten Pakets zurückgerechnet werden. Das Versenden von mehreren identischen Paketen erfolgt dabei, um durch die gewonnene Redundanz einzelne Paketausfälle kompensieren zu können.

Aus der WO 2012/157308 A1 ist ein Verfahren zum Lokalisieren von Rädern eines Fahrzeugs gemäß dem Oberbegriff des Anspruchs 1 bekannt.

Ausgehend vom Stand der Technik ist es eine Aufgabe der vorliegenden Erfindung, eine Möglichkeit zum Lokalisieren von Rädern eines Fahrzeugs bereitzustellen, die eine verbesserte Genauigkeit aufweist bzw. schneller konvergiert.

Diese Aufgabe wird gelöst durch die Gegenstände der unabhängigen Patentansprüche. Die abhängigen Ansprüche geben Ausführungsformen der Erfindung an.

Dementsprechend umfasst die Erfindung ein Verfahren zum Lokalisieren von Rädern eines Fahrzeugs, bei dem zumindest ein Rad eine Radelektronik aufweist, wobei fahrzeugseitig die folgenden Schritte ausgeführt werden. Zunächst wird ein Signal von der Radelektronik empfangen, das Rückschlüsse auf einen Zeitpunkt zulässt, an dem das Rad eine erste Drehwinkelposition eingenommen hat. Basierend auf dem Signal wird eine erste Drehwinkelinformation erzeugt. Zweite Drehwinkelpositionen der Räder werden durch Sensoren bestimmt, die jeweils einer bestimmten Position am Fahrzeug zugeordnet sind. Basierend auf den zweiten Drehwinkelpositionen werden zweite Drehwinkelinformationen bereitgestellt. Die erste Drehwinkelinformation wird mit den zweiten Drehwinkelinformationen abgeglichen. Das der Radelektronik zugeordnete Rad wird abhängig von diesem Vergleich lokalisiert. Bei diesem Verfahren besteht das Signal aus mehreren Paketen, die zeitversetzt empfangen werden. Der Schritt des Erzeugens der ersten Drehwinkelinformation weist dabei den Schritt auf Ermitteln des Zeitpunkts, an dem das Rad die erste Drehwinkelposition eingenommen hat, basierend auf einem der mehreren Pakete. Fahrzeugseitig wird weiterhin mindestens ein zeitlicher Abstand zwischen den Paketen ermittelt und basierend auf dem ermittelten mindestens einen zeitlichen Abstand wird mindestens ein Schätzwert für den mindestens einen zeitlichen Abstand bereitgestellt.

Durch die Ermittlung mindestens eines zeitlichen Abstands zwischen den Paketen sowie der Bereitstellung mindestens eines Schätzwertes für den mindestens einen zeitlichen Abstand basierend auf dem ermittelten mindestens einem zeitlichen Abstand können Ungenauigkeiten der Uhren der Radelektroniken ausgeglichen werden, so dass ein genaueres Verfahren zum Lokalisieren von Rädern eines Fahrzeugs resultiert bzw. das Verfahren schneller konvergiert, so dass die Räder schneller lokalisiert werden können.

Radelektronikseitig können bei dem Verfahren die folgenden Schritte ausgeführt werden:

Bestimmen der ersten Drehwinkelposition des der Radelektronik zugeordneten Rades und Senden des Signals, das Rückschlüsse auf den Zeitpunkt zulässt, an dem das Rad die erste Drehwinkelposition eingenommen hat.

Bei einer Ausführungsform des Verfahrens weist jedes Paket eine Nummer auf, die angibt, welchen Rang das Paket innerhalb einer Reihenfolge der mehreren Pakete einnimmt. Wenn ein empfangenes Signal kein erstes Paket enthält, erfolgt der Schritt des Ermittelns des Zeitpunkts, an dem das Rad die erste Drehwinkelposition eingenommen hat, basierend auf dem mindestens einen Schätzwert für den mindestens einen zeitlichen Abstand und der Nummer eines Pakets.

Auf diese Weise kann mit Hilfe des mindestens einen Schätzwertes und der Nummer eines ausgewählten Pakets auf den Zeitpunkt, an dem das Rad die erste Drehwinkelposition eingenommen hat, zurückgerechnet werden.

Der Schritt des Ermittelns mindestens eines zeitlichen Abstands zwischen den Paketen kann mehrfach ausgeführt werden und die ermittelten zeitlichen Abstände können entsprechend gespeichert werden.

In einer Ausführungsform wird das Verfahren in mehreren aufeinanderfolgenden Perioden ausgeführt und nur die zeitlichen Abstände der jüngsten n Perioden werden gespeichert, wobei es sich bei n insbesondere um eine natürliche Zahl handeln kann. Dies kann beispielsweise mittels eines Ringpuffers implementiert werden. Auf diese Weise wird der Speicherplatzbedarf reduziert.

Der Schritt des Bereitsstellens mindestens eines Schätzwertes kann den Schritt umfassen Bilden mindestens eines Mittelwertes aus den gespeicherten zeitlichen Abständen. Die gespeicherten zeitlichen Abstände werden in diesem Falle also gemittelt, um auf diese Weise einen robusteren Schätzwert zu generieren.

In einer Ausführungsform umfasst der Schritt des Bereitstellens mindestens eines Schätzwertes die folgenden Schritte. Ein erstes Produkt wird berechnet durch Multiplizieren des in einer aktuellen Periode ermittelten mindestens einen zeitlichen Abstands mit einem vorherbestimmten Wert, der zwischen 0 und 1 liegt. Davor, danach oder zeitgleich kann ein zweites Produkt berechnet werden durch Multiplizieren eines Schätzwertes einer vorhergehenden Periode mit 1 minus den vorhergebestimmten Wert. Bei dieser vorhergehenden Periode kann es sich insbesondere um die Periode handeln, die der aktuellen Periode unmittelbar zeitlich vorangeht. Durch Addieren des ersten und zweiten Produkts kann dann der Schätzwert der aktuellen Periode berechnet werden. Bei dieser Ausführungsform wird der Speicherbedarf minimiert, da der mindestens eine Schätzwert nur für eine Periode gespeichert wird.

Der Schritt des Ermittelns mindestens eines zeitlichen Abstands zwischen den Paketen wird in einer Ausführungsform nur dann ausgeführt, wenn das empfangene Signal alle erwarteten Pakete umfasst. Auf diese Weise soll verhindert werden, dass durch ein etwaiges Fehlen eines Paketes falsche zeitliche Abstände ermittelt werden.

Zusätzlich umfasst die vorliegende Erfindung eine Vorrichtung zum Lokalisieren von Rädern eines Fahrzeugs, bei dem zumindest ein Rad eine Radelektronik aufweist. Die Vorrichtung besitzt eine erste Empfangseinheit zum Empfangen eines Signals von der Radelektronik, wobei das Signal Rückschlüsse auf einen Zeitpunkt zulässt, an dem das Rad eine erste Drehwinkelposition eingenommen hat. Eine erste Verarbeitungseinheit dient zum Erzeugen einer ersten Drehwinkelinformation basierend auf dem Signal. Eine zweite Empfangseinheit der Vorrichtung dient zum Empfangen von zweiten Drehwinkelpositionen der Räder gemessen durch Sensoren, die jeweils einer bestimmten Position am Fahrzeug zugeordnet sind. Darüber hinaus umfasst die Vorrichtung eine zweite Verarbeitungseinheit zum Bereitstellen von zweiten Drehwinkelinformationen basierend auf den zweiten Drehwinkelpositionen. Eine Abgleicheinheit ist zum Abgleich der ersten Drehwinkelinformation mit zweiten Drehwinkelinformationen eingerichtet. Eine Lokalisierungseinheit dient zum Lokalisieren des der Radelektronik zugeordneten Rades abhängig von einem Ergebnis der Abgleicheinheit. Dabei ist die erste Empfangseinheit dazu eingerichtet, ein Signal zu empfangen, das aus mehreren Paketen besteht, die zeitversetzt empfangen werden. Die erste Verarbeitungseinheit ist dazu eingerichtet, einen Zeitpunkt, an dem das Rad die erste Drehwinkelposition eingenommen hat, basierend auf einem der mehreren Pakete zu ermitteln. Darüber hinaus weist die Vorrichtung eine Abstandsermittlungseinrichtung auf zum Ermitteln mindestens eines zeitlichen Abstands zwischen den Paketen. Zusätzlich umfasst die Vorrichtung eine Schätzeinrichtung zum Bereitstellen mindestens eines Schätzwertes für den mindestens einen zeitlichen Abstand basierend auf dem ermittelten mindestens einen zeitlichen Abstand.

Darüber hinaus umfasst die vorliegende Erfindung ein Reifendruckkontrollsystem mit einer erfindungsgemäßen Vorrichtung.

Die Erfindung wurde mit Bezug auf ein Verfahren sowie auf eine Vorrichtung beschrieben. Sofern nichts anderes explizit angegeben ist, sind die Merkmale des Verfahrens analog auf die erfindungsgemäße Vorrichtung anwendbar. Das bedeutet insbesondere, dass die Vorrichtung die entsprechenden Mittel zur Durchführung der beschriebenen Verfahrensschritte aufweist. Um die Patentbeschreibung nicht unnötig zu verlängern, soll auf eine Wiederholung dieser Mittel verzichtet werden. Dennoch sollen sie als offenbart gelten.

Weitere Vorteile und Details von Ausführungsformen der vorliegenden Erfindung werden im Folgenden mit Bezug auf die Figuren erläutert. Dabei zeigen

Figur 1a    ein Fahrzeug von der Seite;

Figur 1b    eine schematische Darstellung des Fahrzeugs von unten, bei der wesentliche Elemente eines Reifendruckkontrollsystems dargestellt sind;

Figur 2    ein mit einer Radelektronik ausgestattetes Rad;

Figur 3    ein Signal, das aus mehreren Paketen besteht;

Figur 4a    eine Ausführungsform einer erfindungsgemäßen Vorrichtung;

Figur 4b     eine Skizze zur Erläuterung des Abgleichens und Lokalisierens;

Figur 5     Verfahrensschritte einer Ausführungsform eines erfindungsgemäßen Verfahrens;

Figur 6     weitere Schritte einer Ausführungsform eines erfindungsgemäßen Verfahrens und

Figur 7     weitere Schritte einer weiteren Ausführungsform eines erfindungsgemäßen Verfahrens.

In der nachfolgenden Beschreibung werden gleiche und gleichwirkende Elemente, sofern nichts anderes angegeben ist, mit denselben Bezugszeichen benannt.

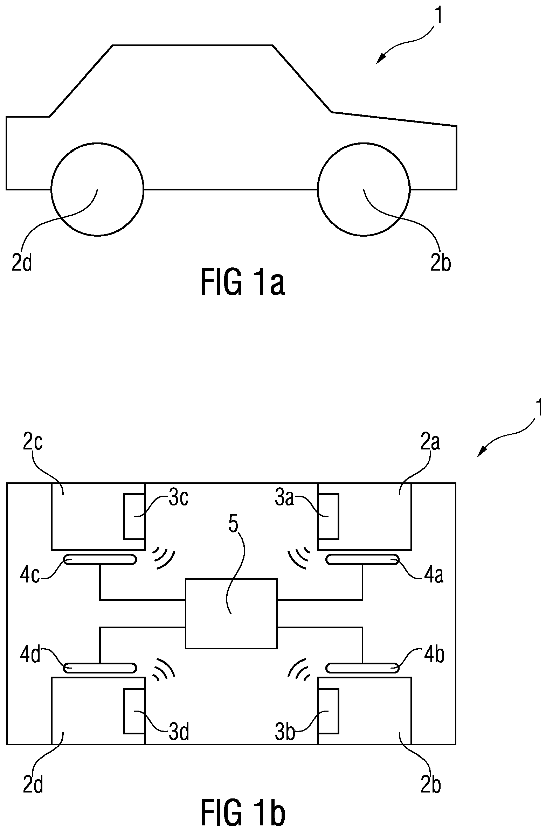

Figur 1a zeigt ein Fahrzeug 1 in einer Seitenansicht. Dabei sind die beiden Räder 2b und 2d zu sehen. Dasselbe Fahrzeug ist in Figur 1b noch einmal von unten dargestellt, wobei wesentliche Elemente eines Reifendruckkontrollsystems eingezeichnet sind. Die vier Räder 2a bis 2d verfügen jeweils über eine Radelektronik 3a bis 3d. Den Rädern 2a bis 2d sind jeweils fahrzeugseitig angeordnete Sensoren 4a bis 4d zugeordnet. Bei diesen Sensoren kann es sich beispielsweise um ABS-Sensoren oder ESP-Sensoren handeln. Die Sensoren 4a bis 4d sind mit einer Ausführungsform einer erfindungsgemäßen Vorrichtung 5 verbunden. Diese ist unter anderem dazu eingerichtet, Signale von den Radelektroniken 3a bis 3d zu empfangen.

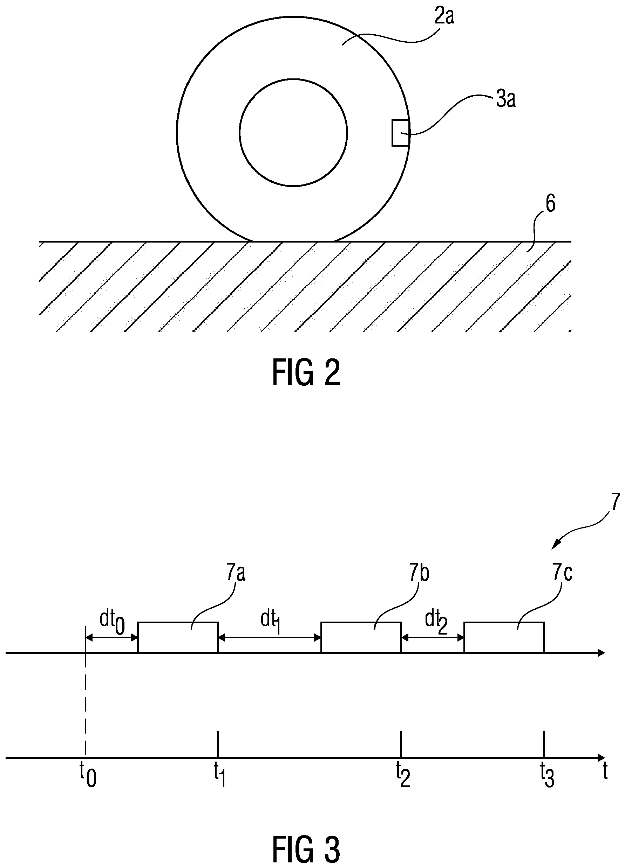

Figur 2 zeigt das Rad 2a nochmal in einer Seitenansicht, wobei zu erkennen ist, dass die Radelektronik 3a beim Abrollen des Rades 2a auf dem Untergrund 6 mit dem Rad rotiert.

Die Radeinheit 3a sendet ein Signal 7 aus, das in der Figur 3 gezeigt ist und die Pakete 7a, 7b und 7c umfasst. Die Radeinheit 3a sendet mehrere Pakete, weil die fahrzeugseitig angeordnete Empfangseinheit möglicherweise eins oder mehrere der Pakete beispielsweise aufgrund von Verschattungen durch Karosserieteile nicht empfangen kann. Auf der unteren Skala ist die Zeit t aufgetragen. Zum Zeitpunkt $t_0$ durchläuft das Rad die erste Drehwinkelposition. Hierbei kann es sich beispielsweise um die höchste Position im Rad (0°) oder um die Mitte der Reifenaufstandsfläche (180°) bzw. den Ein- oder Austrittspunkt in bzw. aus der Reifenaufstandsfläche handeln. Nach einer Verzögerungszeit $dt_0$ wird das erste Paket 7a gesendet. Die Verzögerungszeit $dt_0$ kann vorherbestimmt sein oder während des Betriebs durch die Radelektronik ermittelt werden. Zum Zeitpunkt $t_1$ ist das Paket 7a vollständig fahrzeugseitig empfangen worden. Der Abstand zwischen dem ersten Paket 7a und dem zweiten Paket 7b beträgt $dt_1$ und der Abstand zwischen dem zweiten Paket 7b und dem dritten Paket 7c beträgt $dt_2$. Das zweite Paket 7b ist zum Zeitpunkt $t_2$ vollständig empfangen und das Paket 7c zum Zeitpunkt $t_3$. Die Abstände zwischen den Paketen $dt_1$ und $dt_2$ werden kontinuierlich gemessen und auf ihrer Basis werden Schätzwerte für diese Abstände bereitgestellt. Die Verzögerungszeit $dt_0$ ist unter Bezug auf die Uhr der Radelektronik wohl bekannt. Aus dem Verhältnis des fahrzeugseitig geschätzten Abstandes $dt_1$ im Vergleich zu einem der Radeinheit wohl bekannten Abstand zwischen dem ersten und zweiten Paket bezogen auf die Uhr der Radelektronik kann $dt_0$ an etwaige Uhrabweichungen angepasst werden. In Kenntnis der Verzögerungszeit $dt_0$ und der Abstände $dt_1$ und $dt_2$ sowie der Sendedauern für die Pakete 7a, 7b und 7c könnte beispielsweise vom Empfangszeitpunkt $t_3$ des dritten Paketes auf den Zeitpunkt $t_0$ zurückgerechnet werden, zu dem das Rad die erste Drehwinkelposition eingenommen hat. Um von $t_2$ auf $t_0$ zu schließen, müssen lediglich die Abstände $dt_0$ und $dt_1$ sowie die Sendedauern der Pakete 7a und 7b bekannt sein. Die Erfindung ist nicht auf ein Signal mit drei Paketen beschränkt. Vielmehr kann eine beliebige Anzahl von Paketen verwendet werden, solange die Anzahl zumindest zwei beträgt.

Anhand des Abstands $dt_1$ soll das Problem der Ungenauigkeit der Uhren der Radelektronik verdeutlicht werden. Handelsübliche Uhren haben eine Ungenauigkeit von etwa 2 bis 5%. Im Folgenden Beispiel soll von 5% Ungenauigkeit ausgegangen werden. Nehmen wir an, der Abstand $dt_1$ betrage 200 Millisekunden und das Fahrzeug bewege sich mit einer Geschwindigkeit von 150 km/h. Dann würde eine Uhrenungenauigkeit von 5% in etwa einer Winkelungenauigkeit $\alpha$ von 75 Grad entsprechen. Dies ergibt sich aus folgender Formel:

$$\alpha = \frac{\text{Ungenauigkeit in \% * } dt_1 \text{ * Geschwindigkeit * } 360°}{\text{Reifenumfang,}}$$

wobei für den Reifenumfang 2 Meter angenommen wurden. Die Winkelungenauigkeit von 75° hat zur Folge, dass die Lokalisierung in der Regel länger dauert und unter Umständen sogar überhaupt nicht konvergiert. In der US 8,332,104 B2 beispielsweise werden die Abstände $dt_1$ und $dt_2$ in die fahrzeugseitige Steuereinheit fest einprogrammiert. Sie werden also nicht regelmäßig ermittelt, um so aktuelle Schätzwerte für die zeitlichen Abstände bereitzustellen, so dass es bei der US 8,332,104 B2 zu den gerade beschriebenen Winkelungenauigkeiten kommt, die dazu führen, dass das Verfahren nur langsam konvergiert.

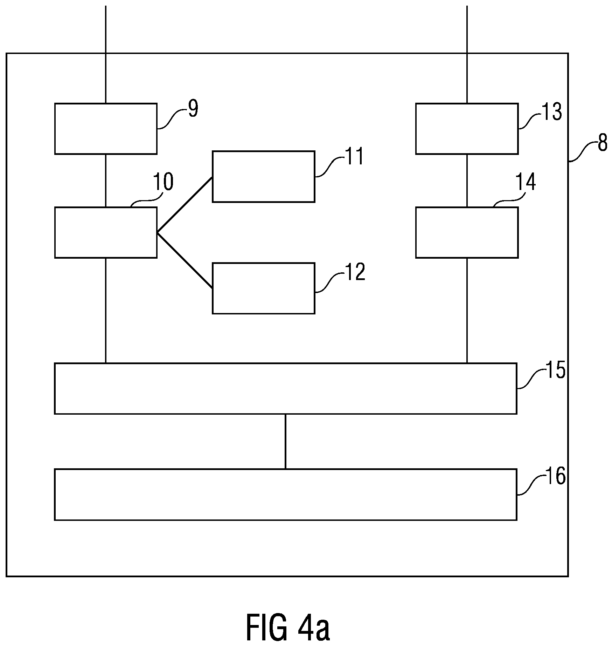

Figur 4a zeigt eine Ausführungsform einer Vorrichtung zum Lokalisieren von Rädern eines Fahrzeugs, bei dem zumindest ein Rad eine Radelektronik aufweist. Die gezeigte Vorrichtung 8 umfasst eine erste Empfangseinheit 9 zum Empfangen eines Signals von der Radelektronik, das Rückschlüsse auf einen Zeitpunkt $t_0$ zulässt, an dem das Rad eine erste Drehwinkelposition eingenommen hat. Die Empfangseinheit ist dazu eingerichtet, ein Signal zu empfangen, das aus mehreren Paketen besteht, die zeitversetzt empfangen werden. Darüber hinaus besitzt die Vorrichtung 8 eine erste Verarbeitungseinheit 10 zum Erzeugen einer ersten Drehwinkelinformation basierend auf dem Signal. Diese ist dazu eingerichtet, basierend auf einem der mehreren Pakete einen Zeitpunkt $t_0$ zu ermitteln, zu dem das Rad die erste Drehwinkelposition eingenommen hat. Hierfür ist die erste Verarbeitungseinheit 10 mit einer Abstandsermittlungseinrichtung 11 zum Ermitteln mindestens eines zeitlichen Abstands zwischen den Paketen und einer Schätzeinrichtung 12 zum Bereitstellen mindestens eines Schätzwertes für den mindestens einen zeitlichen Abstand basierend auf dem ermittelten mindestens einem zeitlichen Abstand verbunden.

Weiterhin umfasst die Vorrichtung 8 eine zweite Empfangseinheit 13 zum Empfangen von Drehwinkelpositionen der Räder gemessen durch Sensoren, die jeweils einer bestimmten Position am Fahrzeug zugeordnet sind. Dabei kann es sich beispielsweise um ABS- oder ESP-Sensoren handeln. Eine zweite Verarbeitungseinheit 14 stellt basierend auf den zweiten Drehwinkelpositionen zweite Drehwinkelinformationen bereit. Dabei kann es sich insbesondere um die Zeitpunkte handeln, an denen aus Sicht der Sensoren das zugeordnete Rad die zweite Drehwinkelposition eingenommen hat, die vorzugsweise der ersten Drehwinkelposition entspricht.

Eine Abgleicheinheit 15 verwendet die erste Drehwinkelinformation der ersten Verarbeitungseinheit 10 und die zweiten Drehwinkelinformationen der zweiten Verarbeitungseinheit 14 und gleicht diese miteinander ab. Abhängig von dem Ergebnis der Abgleicheinheit 15 lokalisiert die Lokalisierungseinheit 16 das der Radelektronik zugeordnete Rad.

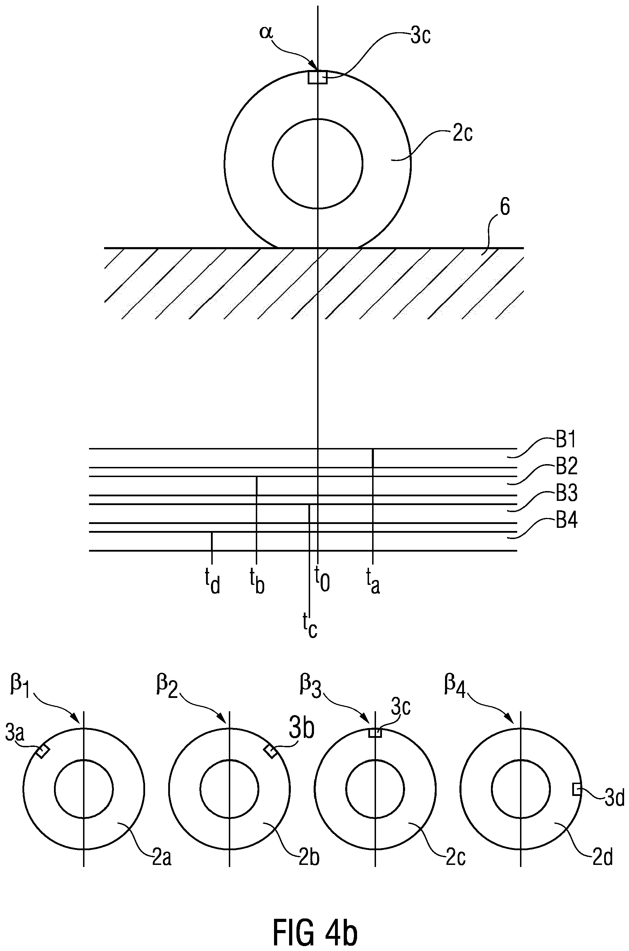

Eine Ausführungsform dieses Abgleichens und Lokalisierens soll im Folgenden mit Bezug auf Figur 4b näher erläutert werden. Diese Figur zeigt oben das Rad 2c mit einer Radelektronik 3c, die sich gerade in der ersten Drehwin- kelposition $\alpha$ befindet. Die erste Drehwinkelinformation gibt an, wann sich die Radelektronik 3c in der ersten Drehwin- kelposition $\alpha$ befunden hat. Im vorliegenden Beispiel entspricht die erste Drehwinkelinformation also $t_0$. In der Mitte der Figur 4b sind für jedes der vier Räder 2a - 2d Zeitbalken aufgetragen. Der Balken B1 zeigt an, dass sich das Rad 2a zum Zeitpunkt $t_a$ in der zweiten Drehwinkelposition befunden hat. Dementsprechend verdeutlicht der Balken B2, dass sich das Rad 2b zum Zeitpunkt $t_b$ in der zweiten Drehwinkelposition befunden hat. Die Balken B3 und B4 entsprechen den Rädern 2c und 2d. Das Rad 2c hat zum Zeitpunkt $t_c$ die zweite Drehwinkelposition eingenommen, während sich das Rad 2d in dieser zweiten Drehwinkelposition zum Zeitpunkt $t_d$ befunden hat.

Unten in der Figur 4b sind die Räder 2a - 2d mit ihren Radelektroniken 3a - 3d zum Zeitpunkt $t_0$ dargestellt. Die Radelektronik 3a befindet sich zum Zeitpunkt $t_0$ noch vor der zweiten Drehwinkelposition $\beta_1$. Folglich durchläuft sie die Drehwinkelposition nach $t_0$, wie der Balken B1 verdeutlicht. Die Radelektronik 3b hat die zweite Drehwinkelposition $\beta_2$ bereits durchlaufen. Die Radelektronik 3c liegt aus Sicht des Sensors, der der entsprechenden Position am Fahrzeug fest zugeordnet ist, zum Zeitpunkt $t_0$ fast exakt in der zweiten Drehwinkelposition $\beta_3$. Die Radelektronik $t_d$ hat zum Zeitpunkt $t_0$ die zweite Drehwinkelposition $\beta_4$ bereits am längsten durchlaufen.

Wie der Figur 4b zu entnehmen ist, liegt der Zeitpunkt $t_c$ am dichtesten am Zeitpunkt $t_0$, so dass durch einen entsprechenden Abgleich darauf geschlossen werden kann, dass die Radelektronik, die das empfangene Signal gesendet hat, die Radelektronik 3c ist, die dem Rad 2c zugeordnet ist. Die Abweichungen zwischen t0 und tc können sich dabei insbesondere durch Messungenauigkeiten ergeben. Somit kann durch einen Abgleich der ersten Drehwinkelin- formation $t_0$ mit den zweiten Drehwinkelinformationen $t_a$ - $t_d$ das Rad entsprechend lokalisiert werden.

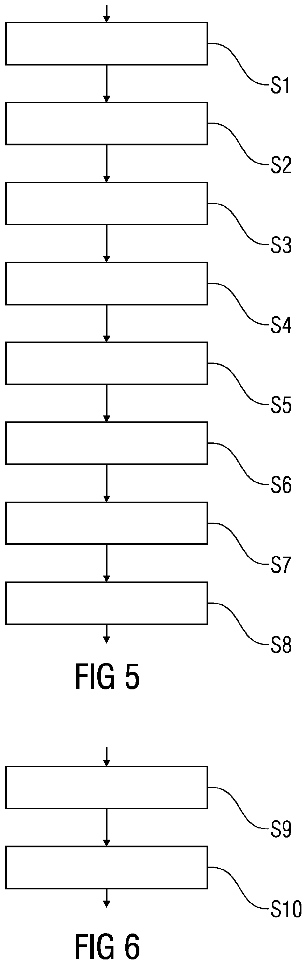

Figur 5 zeigt Schritte einer Ausführungsform eines erfindungsgemäßen Verfahrens. In Schritt S1 wird zunächst eine erste Drehwinkelposition eines Rades bestimmt, dem die Radelektronik zugeordnet ist. In Schritt S2 wird dann ein Signal von der Radelektronik an einen fahrzeugseitigen Empfänger gesendet, das Rückschlüsse zulässt auf einen Zeitpunkt, an dem das Rad die erste Drehwinkelposition eingenommen hat. Dieses Signal wird in Schritt S3 empfangen.

Basierend auf dem Signal wird in Schritt S4 eine erste Drehwinkelinformation erzeugt. Dies umfasst, dass der Zeitpunkt ermittelt wird, an dem das Rad die erste Drehwinkelposition eingenommen hat. Hierfür wird von einem der mehreren Pakete ausgegangen. In Schritt S5 werden zweite Drehwinkelpositionen der Räder durch Sensoren bestimmt, die jeweils einer bestimmten Position am Fahrzeug zugeordnet sind. Basierend auf diesen zweiten Drehwinkelpositionen werden zweite Drehwinkelinformationen bereitgestellt (Schritt S6). Anschließend erfolgt in Schritt S7 ein Abgleich der ersten Drehwinkelinformation mit den zweiten Drehwinkelinformationen, um so in Schritt S8 das der Radelektronik zugeordnete Rad abhängig von diesem Vergleich zu lokalisieren.

Figur 6 illustriert eine Ausführungsform einer Routine, die für das erfindungsgemäße Verfahren einen Schätzwert bereitstellt. Zunächst wird in Schritt S9 ein zeitlicher Abstand zwischen den empfangenden Paketen ermittelt. In Schritt S10 wird dann mindestens ein Schätzwert für den mindestens einen zeitlichen Abstand basierend auf dem ermittelten mindestens einen zeitlichen Abstand bereitgestellt.

Mithilfe dieses Schätzwertes kann in dem Schritt des Erzeugens einer ersten Drehwinkelinformation S4 der genannte Zeitpunkt basierend auf dem mindestens einen Schätzwert für den mindestens einen zeitlichen Abstand und der Nummer eines Paketes erfolgen.

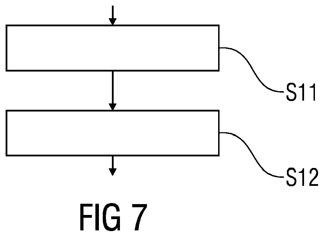

Figur 7 zeigt eine weitere Ausführungsform einer Routine, die für das erfindungsgemäße Verfahren einen Schätzwert bereitstellt. Zunächst wird in Schritt S11 in der aktuellen Periode t ein aktueller zeitlicher Abstand $A_t$ ermittelt.

Aufgrund dieses aktuellen zeitlichen Abstands $A_t$ wird in Schritt S12 basierend auf folgender Formel der Schätzwert $S_t$ der aktuellen Periode ermittelt:

$$S_t = A_t \cdot \gamma + S_{t-1} \cdot (1 - \gamma),$$

wobei $A_t$, wie bereits oben gesagt, den aktuellen zeitlichen Abstand in der aktuellen Periode sowie $S_t$ den Schätzwert in der aktuellen Periode bezeichnet. $S_{t-1}$ ist der Schätzwert der vorhergehenden Periode. $\gamma$ symbolisiert einen Wert zwischen 0 und 1. Der aktuelle zeitliche Abstand in der aktuellen Periode $A_t$ geht also gewichtet als Korrekturfaktor zum Schätzwert der vorhergehenden Periode $S_{t-1}$ in den Schätzwert der aktuellen Periode $S_t$ ein. Auf diese Weise muss in jeder Periode jeweils nur ein Schätzwert gespeichert werden, der entsprechend fortgeschrieben wird.

Durch das erfindungsgemäße Verfahren kann jedes der Pakete verwendet werden, um Rückschlüsse auf den Zeitpunkt zu ziehen, zu dem das Rad die erste Drehwinkelposition eingenommen hat. Die zeitlichen Abstände können dabei wiederholt ermittelt werden, so dass Abweichungen der Uhren der Radeinheiten untereinander und deren Ungenauigkeiten ausgeglichen werden.

Auf diese Weise kann eine schnellere Lokalisierung von Rädern eines Fahrzeugs erreicht werden.

Die mit Bezug auf die Figuren gemachten Erläuterungen sind rein illustrativ und nicht beschränkend zu verstehen. An den beschriebenen Ausführungsformen können viele Änderungen vorgenommen werden, ohne den Schutzbereich, wie er in den beigefügten Ansprüchen definiert ist, zu verlassen.

Bezugszeichenliste

| | |
|---|---|
| 1 | Fahrzeug |
| 2a bis 2d | Rad |
| 3a bis 3d | Radelektronik |
| 4a bis 4d | Sensor, der einer bestimmten Position am Fahrzeug zugeordnet ist |
| 5 | Vorrichtung zum Lokalisieren von Rädern eines Fahrzeugs |
| 6 | Untergrund |
| 7 | Signal |
| 7a bis 7c | Paket |
| $t_0$ | Zeitpunkt, an dem das Rad die erste Drehwinkelposition eingenommen hat |
| $t_1$ | Empfangszeitpunkt des ersten Pakets |
| $t_2$ | Empfangszeitpunkt des zweiten Pakets |
| $t_3$ | Empfangszeitpunkt des dritten Pakets |
| $dt_0$ | Abstand zwischen $t_0$ und dem Sendeanfang des ersten Pakets |
| $dt_1$ | Abstand zwischen dem ersten und zweiten Paket |
| $dt_2$ | Abstand zwischen dem zweiten und dritten Paket |
| 8 | Ausführungsform einer erfindungsgemäßen Vorrichtung |
| 9 | erste Empfangseinheit |
| 10 | erste Verarbeitungseinheit |
| 11 | Abstandsermittlungseinrichtung |
| 12 | Schätzeinrichtung |
| 13 | zweite Empfangseinheit |
| 14 | zweite Verarbeitungseinheit |
| 15 | Abgleicheinheit |
| 16 | Lokalisierungseinheit |
| $\alpha$ | erste Drehwinkelposition |
| $\beta_1 - \beta_4$ | zweite Drehwinkelpositionen |
| B1 - B4 | Balken zur Darstellung des Zeitpunktes, zu dem das entsprechende Rad die zweite Drehwinkelposition eingenommen hat |
| $t_a - t_d$ | zweite Drehwinkelinformationen |
| S1 | Bestimmen einer ersten Drehwinkelposition |
| S2 | Senden eines Signals |
| S3 | Empfangen des Signals |
| S4 | Erzeugen einer ersten Drehwinkelinformation |

| S5 | Bestimmen von zweiten Drehwinkelpositionen |
|---|---|
| S6 | Bereitstellen von zweiten Drehwinkelinformationen |
| S7 | Abgleichen der ersten Drehwinkelinformation mit den zweiten Drehwinkelinformationen |
| S8 | Lokalisieren |
| S9 | Ermitteln mindestens eines zeitlichen Abstands zwischen den Paketen |
| S10 | Bereitstellen mindestens eines Schätzwertes für den mindestens einen zeitlichen Abstand |
| S11 | Ermitteln mindestens eines zeitlichen Abstands zwischen den Paketen |
| S12 | Bereitstellen mindestens eines Schätzwertes für den mindestens einen zeitlichen Abstand |

**Patentansprüche**

1. Verfahren zum Lokalisieren von Rädern (2a-2d) eines Fahrzeugs (1), bei dem zumindest ein Rad eine Radelektronik (3a-3d) aufweist, wobei fahrzeugseitig die folgenden Schritte ausgeführt werden:

   - Empfangen (S3) eines Signals (7) von der Radelektronik, das Rückschlüsse auf einen Zeitpunkt ($t_0$) zulässt, an dem das Rad eine erste Drehwinkelposition ($\alpha$) eingenommen hat;
   - Erzeugen einer ersten Drehwinkelinformation ($t_0$) (S4) basierend auf dem Signal;
   - Bestimmen von zweiten Drehwinkelpositionen ($\beta_1$ - $\beta_4$) (S5) der Räder durch Sensoren (4a - 4d), die jeweils einer bestimmten Position am Fahrzeug zugeordnet sind;
   - Bereitstellen von zweiten Drehwinkelinformationen ($t_a$ - $t_d$) (S6) basierend auf den zweiten Drehwinkelpositionen ($\beta_1$ - $\beta_4$);
   - Abgleichen der ersten Drehwinkelinformation ($t_0$) mit den zweiten Drehwinkelinformationen ($t_a$ - $t_d$) (S7) und
   - Lokalisieren (S8) des der Radelektronik zugeordneten Rades abhängig von diesem Abgleich;

   wobei

   - das Signal (7) aus mehreren Paketen (7a-7c) besteht, die zeitversetzt empfangen werden, und
   - der Schritt des Erzeugens der ersten Drehwinkelinformation (S4) den Schritt aufweist Ermitteln des Zeitpunkts ($t_0$), an dem das Rad die erste Drehwinkelposition eingenommen hat, basierend auf einem der mehreren Pakete (7a-7c),

   **dadurch gekennzeichnet, dass** weiterhin fahrzeugseitig die folgenden Schritte ausgeführt werden:

   - Ermitteln mindestens eines zeitlichen Abstands ($dt_1$, $dt_2$) zwischen den Paketen (S9, S11) und
   - Bereitstellen mindestens eines Schätzwertes (S10, S12) für den mindestens einen zeitlichen Abstand basierend auf dem ermittelten mindestens einen zeitlichen Abstand.

2. Verfahren nach Anspruch 1, wobei radelektronikseitig die folgenden Schritte ausgeführt werden:

   - Bestimmen der ersten Drehwinkelposition (S1) des der Radelektronik zugeordneten Rades und
   - Senden (S2) des Signals (7), das Rückschlüsse auf den Zeitpunkt ($t_0$) zulässt, an dem das Rad die erste Drehwinkelposition eingenommen hat.

3. Verfahren nach Anspruch 1 oder 2, wobei jedes Paket (7a-7c) eine Nummer aufweist, die angibt, welchen Rang das Paket innerhalb einer Reihenfolge der mehreren Pakete einnimmt, und der Schritt des Ermittelns des Zeitpunkts ($t_0$) basierend auf dem mindestens einen Schätzwert für den mindestens einen zeitlichen Abstand und der Nummer eines Pakets durchgeführt wird, wenn ein empfangenes Signal kein erstes Paket (7a) enthält.

4. Verfahren nach einem der vorhergehenden Ansprüche, wobei der Schritt des Ermittelns mindestens eines zeitlichen Abstands zwischen den Paketen mehrfach ausgeführt wird und die ermittelten zeitlichen Abstände gespeichert werden.

5. Verfahren nach Anspruch 4, wobei das Verfahren in mehreren aufeinanderfolgenden Perioden ausgeführt wird und nur die zeitlichen Abstände der jüngsten n Perioden gespeichert werden.

6. Verfahren nach Anspruch 4 oder 5, wobei der Schritt des Bereitstellens mindestens eines Schätzwertes den Schritt umfasst Bilden mindestens eines Mittelwertes aus den gespeicherten zeitlichen Abständen.

7. Verfahren nach einem der vorhergehenden Ansprüche, wobei der Schritt des Bereitstellens mindestens eines Schätzwertes (S12) die Schritte umfasst

- Berechnen eines ersten Produkts durch Multiplizieren des in einer aktuellen Periode ermittelten mindestens einen zeitlichen Abstands mit einem vorherbestimmten Wert, der zwischen 0 und 1 liegt,
- Berechnen ein zweiten Produkts durch Multiplizieren eines Schätzwertes einer vorhergehenden Periode mit eins minus den vorherbestimmten Wert, wobei die vorhergehende Periode insbesondere der aktuellen Periode unmittelbar zeitlich vorangeht, und
- Berechnen des Schätzwertes der aktuellen Periode durch Addieren des ersten und zweiten Produkts.

8. Verfahren nach einem der vorhergehenden Ansprüche, wobei der Schritt des Ermittelns mindestens eines zeitlichen Abstands zwischen den Paketen nur dann ausgeführt wird, wenn das empfangene Signal alle erwarteten Pakete umfasst.

9. Vorrichtung (5, 8) zum Lokalisieren von Rädern (2a-2d) eines Fahrzeug (1), bei dem zumindest ein Rad eine Radelektronik (3a-3d) aufweist, mit

- einer ersten Empfangseinheit (9) zum Empfangen eines Signals von der Radelektronik, das Rückschlüsse auf einen Zeitpunkt ($t_0$) zulässt, an dem das Rad eine erste Drehwinkelposition ($\alpha$) eingenommen hat;
- einer ersten Verarbeitungseinheit (10) zum Erzeugen einer ersten Drehwinkelinformation ($t_0$) basierend auf dem Signal;
- einer zweiten Empfangseinheit (13) zum Empfangen von zweiten Drehwinkelpositionen ($\beta_1$ - $\beta_4$) der Räder gemessen durch Sensoren (4a-4d), die jeweils einer bestimmten Position am Fahrzeug zugeordnet sind;
- einer zweiten Verarbeitungseinheit (14) zum Bereitstellen von zweiten Drehwinkelinformationen ($t_a$ - $t_d$) basierend auf den zweiten Drehwinkelpositionen ($\beta_1$ - $\beta_4$);
- einer Abgleicheinheit (15) zum Abgleichen der ersten Drehwinkelinformation ($t_0$) mit zweiten Drehwinkelinformationen ($t_a$ - $t_d$) und
- einer Lokalisierungseinheit (16) zum Lokalisieren des der Radelektronik zugeordneten Rades abhängig von einem Ergebnis der Abgleicheinheit;

wobei

- die erste Empfangseinheit (9) dazu eingerichtet ist, ein Signal zu empfangen, das aus mehreren Paketen (7a-7c) besteht, die zeitversetzt empfangen werden, und
- die erste Verarbeitungseinheit (10) dazu eingerichtet ist, einen Zeitpunkt ($t_0$), an dem das Rad die erste Drehwinkelposition ($\alpha$) eingenommen hat, basierend auf einem der mehreren Pakete zu ermitteln,

**dadurch gekennzeichnet, dass** die Vorrichtung weiterhin aufweist

- eine Abstandsermittlungseinrichtung (11) zum Ermitteln mindestens eines zeitlichen Abstands zwischen den Paketen und
- eine Schätzeinrichtung (12) zum Bereitstellen mindestens eines Schätzwertes für den mindestens einen zeitlichen Abstand basierend auf dem ermittelten mindestens einen zeitlichen Abstand.

10. Reifendruckkontrollsystem mit einer Vorrichtung nach Anspruch 9.

**Claims**

1. Method for locating wheels (2a-2d) of a vehicle (1), wherein at least one wheel has wheel electronics (3a-3d), wherein the following steps are executed by the vehicle:

- reception (S3) of a signal (7) from the wheel electronics which permits conclusions about a time ($t_0$) at which the wheel assumed a first rotary angle position ($\alpha$);
- generation of first rotary angle information ($t_0$) (S4) based on the signal;
- determination of second rotary angle positions ($\beta_1$ - $\beta_4$) (S5) of the wheels by sensors (4a - 4d), which are each assigned to a specific position on the vehicle;
- provision of second bits of rotary angle information ($t_a$ - $t_d$) (S6) based on the second rotary angle positions

$(\beta_1 - \beta_4)$;
- comparison of the first rotary angle information $(t_0)$ with the second bits of rotary angle information $(t_a - t_d)$ (S7) and
- location (S8) of the wheel assigned to the wheel electronics depending on this comparison;

wherein

- the signal (7) consists of a plurality of packets (7a-7c) which are received with a delay, and
- the step of generating the first rotary angle information (S4) contains the step of determining the time $(t_0)$ at which the wheel assumed the first rotary angle position based on one of the plurality of packets (7a-7c),

**characterized in that** the following steps are executed in addition by the vehicle:

- determination of at least one time interval $(dt_1, dt_2)$ between the packets (S9, S11) and
- provision of at least one estimated value (S10, S12) for the at least one time interval based on the determined at least one time interval.

2. Method according to Claim 1, wherein the wheel electronics execute the following steps:

- determination of the first rotary angle position (S1) of the wheel assigned to the wheel electronics, and
- transmission (S2) of the signal (7) which permits conclusions about the time $(t_0)$ at which the wheel assumed the first rotary angle position.

3. Method according to Claim 1 or 2, wherein each packet (7a-7c) has a number which indicates the rank assumed by the packet within a sequence of the plurality of packets, and the step of determining the time $(t_0)$ based on the at least one estimated value for the at least one time interval and the number of a packet is performed if a received signal does not contain a first packet (7a).

4. Method according to one of the preceding claims, wherein the step of determining at least one time interval between the packets is executed several times, and the determined time intervals are saved.

5. Method according to Claim 4, wherein the method is executed in a plurality of sequential periods, and only the time intervals of the most recent n periods are saved.

6. Method according to Claim 4 or 5, wherein the step of providing at least one estimated value comprises the step of forming at least one average from the saved time intervals.

7. Method according to one of the preceding claims, wherein the step of providing at least one estimated value (S12) comprises the steps:

- calculation of a first product by multiplying the at least one time interval determined in a current period by a previously determined value which lies between 0 and 1,
- calculation of a second product by multiplying an estimated value of a preceding period by one minus the previously determined value, wherein the preceding period in particular directly precedes the current period in time, and
- calculation of the estimated value of the current period by adding the first and second product.

8. Method according to one of the preceding claims, wherein the step of determining at least one time interval between the packets is only executed when the received signal comprises all the anticipated packets.

9. Device (5, 8) for locating wheels (2a-2d) of a vehicle (1), wherein the at least one wheel has wheel electronics (3a-3d), comprising:

- a first reception unit (9) for receiving a signal from the wheel electronics which permits conclusions about a time $(t_0)$ at which the wheel assumed a first rotary angle position $(\alpha)$;
- a first processing unit (10) for generating first rotary angle information $(t_0)$ based on the signal;
- a second reception unit (13) for receiving second rotary angle positions $(\beta_1 - \beta_4)$ of the wheels measured by sensors (4a-4d) which are each assigned to a specific position on the vehicle;

- a second processing unit (14) for providing second bits of rotary angle information ($t_a$ - $t_d$) based on the second rotary angle positions ($\beta_1$ - $\beta_4$);
- a comparison unit (15) for comparing the first rotary angle information ($t_0$) with second bits of rotary angle information ($t_a$ - $t_d$) and
- a locating unit (16) for locating the wheel assigned to the wheel electronics depending on a result of the comparison unit; wherein
- the first reception unit (9) is set up to receive a signal consisting of a plurality of packets (7a-7c) which are received with a delay, and
- the first processing unit (10) is set up to determine a time ($t_0$) at which the wheel assumed the first rotary angle position ($\alpha$) based on one of the plurality of packets,

**characterized in that** the device furthermore comprises:

- an interval-determining device (11) for determining at least one time interval between the packets, and
- an estimating apparatus (12) for providing at least one estimated value for the at least one time interval based on the determined at least one time interval.

**10.** Tire pressure monitoring system with a device according to Claim 9.

**Revendications**

**1.** Procédé de localisation des roues (2a-2d) d'un véhicule (1) dont au moins une roue possède une électronique de roue (3a - 3d), dans lequel les étapes suivantes sont exécutées côté véhicule :

- recevoir (S3) un signal (7) de l'électronique de roue permettant de déduire un instant ($t_0$) auquel la roue a adopté une première position angulaire de rotation ($\alpha$) ;
- générer une première information d'angle de rotation ($t_0$) (S4) sur la base du signal ;
- déterminer deux positions angulaires de rotation ($\beta_1$ - $\beta_4$) (S5) des roues au moyen de capteurs (4a - 4d) qui sont respectivement associés à une position déterminée sur le véhicule ;
- fournir deux informations angulaires de rotation ($t_a$ - $t_d$) (S6) sur la base des deuxièmes positions angulaires de rotation ($\beta_1$ - $\beta_4$);
- comparer la première information angulaire de rotation ($t_0$) aux deuxième informations angulaires de rotation ($t_a$ - $t_d$) (S7) et
- localiser (S8) la roue associée à l'électronique de roue en fonction de ladite comparaison ;

dans lequel

- le signal (7) est constitué de multiples paquets (7a-7c) qui sont reçus de manière décalée dans le temps, et
- l'étape consistant à générer la première information angulaire de rotation (S4) comprend l'étape consistant à déterminer l'instant ($t_0$) auquel la roue a adopté la première position angulaire de rotation, sur la base de l'un des multiples paquets (7a - 7c),

**caractérisé en outre en ce que** les étapes suivantes sont exécutées côté véhicule :

- déterminer au moins un intervalle de temps ($dt_1$, $dt_2$) entre les paquets (S9, S11) et
- fournir au moins une valeur estimée (S10, S12) pour ledit au moins une distance temporelle sur la base de la détermination d'au moins un intervalle de temps.

**2.** Procédé selon la revendication 1, dans lequel les étapes suivantes sont exécutées côté électronique de roue :

- déterminer la première position angulaire de rotation (S1) de la roue associée à l'électronique de roue et
- envoyer (S2) le signal (7) permettant de déduire l'instant ($t_0$) auquel la roue a adopté la première position angulaire de rotation.

**3.** Procédé selon la revendication 1 ou 2, dans lequel chaque paquet (7a - 7c) possède un numéro qui indique le rang occupé par le paquet au sein d'une séquence des multiples paquets, et l'étape de détermination de l'instant ($t_0$) sur la base de ladite au moins une valeur estimée de ladite au moins une distance temporelle estimée et du numéro d'un paquet est exécutée lorsqu'un signal reçu ne contient aucun premier paquet (7a).

4. Procédé selon l'une quelconque des revendications précédentes, dans lequel l'étape de détermination d'au moins une distance temporelle entre les paquets est exécutée de multiples fois et les distances temporelles déterminées sont stockées en mémoire.

5. Procédé selon la revendication 4, dans lequel le procédé est exécuté au cours de plusieurs périodes consécutives et seules les distances temporelles des n périodes les plus récentes sont stockées en mémoire.

6. Procédé selon la revendication 4 ou 5, dans lequel l'étape de fourniture d'au moins une valeur estimée comprend l'étape consistant à calculer au moins une valeur moyenne à partir des distances temporelles stockées en mémoire.

7. Procédé selon l'une quelconque des revendications précédentes, dans lequel l'étape de fourniture d'au moins une valeur estimée (S12) comprend l'étape consistant à :

- calculer un premier produit en multipliant ladite au moins une distance temporelle déterminée au cours d'une période actuelle par une valeur préalablement déterminée qui est comprise entre 0 et 1,
- calculer un deuxième produit en multipliant une valeur estimée d'une période précédente par un moins la valeur préalablement déterminée, dans lequel la période précédente précède notamment immédiatement dans le temps la période actuelle, et
- calculer la valeur estimée de la période actuelle en additionnant les premier et deuxième produits.

8. Procédé selon l'une quelconque des revendications précédentes, dans lequel l'étape de détermination d'au moins une distance temporelle entre les paquets n'est exécutée que lorsque le signal reçu comprend la totalité des paquets attendus.

9. Dispositif (5, 8) de localisation des roues (2a - 2d) d'un véhicule (1) dont au moins une roue possède une électronique de roue (3a-3d), comportant

- une première unité de réception (9) destinée à recevoir un signal de l'électronique de roue permettant de déduire un instant ($t_0$) auquel la roue a adopté une première position angulaire de rotation ($\alpha$) ;
- une première unité de traitement (10) destinée à générer une première information angulaire de rotation ($t_0$) sur la base du signal ;
- une deuxième unité de réception (13) destinée à recevoir des deuxièmes informations angulaires de rotation ($\beta_1 - \beta_4$) des roues, mesurées au moyen de capteurs (4a - 4d) qui sont respectivement associés à une position déterminée sur le véhicule ;
- une deuxième unité de traitement (14) destinée à fournir des deuxièmes informations angulaires de rotation ($t_a - t_d$) sur la base des deuxièmes positions angulaires de rotation ($\beta_1 - \beta_4$) ;
- une unité de comparaison (15) destinée à comparer la première information angulaire de rotation ($t_0$) à des deuxièmes informations angulaires de rotation ($t_a - t_d$) et
- une unité de localisation (16) destinée à localiser la roue associée à l'électronique de roue en fonction d'un résultat de l'unité de comparaison ;

dans lequel

- la première unité de réception (9) est conçue pour recevoir un signal constitué de multiples paquets (7a-7c) qui sont reçus de manière décalée dans le temps, et
- la première unité de traitement (10) est conçue pour déterminer un instant ($t_0$) auquel la roue a adopté la première position angulaire de rotation ($\alpha$) sur la base de l'un des multiples paquets,

caractérisé en en ce que le dispositif comporte en outre :

- un dispositif de détermination de distance (11) destiné à déterminer au moins une distance temporelle entre les paquets, et
- un dispositif d'estimation (12) destiné à fournir au moins une valeur estimée de l'au moins une distance temporelle sur la base de l'au moins une distance temporelle déterminée.

10. Système de contrôle de la pression de pneumatiques comportant un dispositif selon la revendication 9.

FIG 1a

FIG 1b

2a

3a

6

## FIG 2

7

7a     7b     7c

$dt_0$     $dt_1$     $dt_2$

$t_0$     $t_1$     $t_2$     $t_3$     $t$

## FIG 3

FIG 4a

FIG 4b

S1

S2

S3

S4

S5

S6

S7

S8

FIG 5

S9

S10

FIG 6

FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010034703 A1
- WO 2011085877 A1
- US 8332104 B2
- WO 2012157308 A1